# EUROPÄISCHE PATENTSCHRIFT

(11) **EP 3 636 419 B1**
(45) Veröffentlichungstag und Bekanntmachung des Hinweises auf die Patenterteilung: **26.05.2021**
(21) Anmeldenummer: 19185697.0
(22) Anmeldetag: 11.07.2019
(51) Int. Cl.: B29C 70/38, B29K 105/08

(54) **SYSTEM ZUM HERSTELLEN EINES BAUTEILS AUS EINEM FASERVERBUNDMATERIAL**
SYSTEM FOR PRODUCING A COMPONENT FROM A COMPOUND FIBRE MATERIAL
SYSTÈME DE FABRICATION D'UN COMPOSANT À PARTIR D'UN MATÉRIAU COMPOSITE FIBREUX

(30) Priorität: 11.10.2018 DE 102018125133
(43) Veröffentlichungstag der Anmeldung: 15.04.2020
(73) Patentinhaber: Airbus Operations GmbH, 21129 Hamburg (DE)
(72) Erfinder: Kako, Jan-Christoph, 21129 Hamburg (DE)

(56) Entgegenhaltungen:
- EP-A1- 3 173 218
- EP-A2- 0 431 916
- WO-A1-2017/143063
- DE-A1-102014 214 570
- DE-A1-102015 100 102

## Beschreibung

### TECHNISCHES GEBIET

Die Erfindung betrifft ein System zum Herstellen eines Bauteils aus einem Faserverbundmaterial.

### HINTERGRUND DER ERFINDUNG

Zur Herstellung von Bauteilen aus einem Faserverbundmaterial sind viele unterschiedliche Techniken bekannt, die je nach Größe des herzustellenden Bauteils, nach Faser- und Matrixmaterial ausgewählt und eingesetzt werden. Beispielsweise sind Verfahren bekannt, bei denen Fasern in Form von Bändern oder Geweben mit einer Vorimprägnierung manuell auf ein Formwerkzeug aufgelegt werden. Hierdurch können Lagenaufbauten mit mehreren Lagen des Fasermaterials hergestellt werden, wobei die einzelnen Lagen unterschiedliche Ausrichtungen der Fasern haben können. Die Ausrichtungen sind insbesondere belastungsgerecht gewählt.

Es sind zudem automatisierte Vorrichtungen bekannt, die einen solchen Prozess durchführen können. Es sind etwa Vorrichtungen zum automatischen Ablegen von Faserbändern (ATL, "Automatic Tape Laying") und zum automatischen Ablegen von Fasern (AFP, "Automatic Fiber Placement") bekannt, mit denen großformatige Bauteile auf sehr großen Werkzeugoberflächen hergestellt werden können. Die Größe der herzustellenden Bauteile kann bei der Verwendung solcher Vorrichtungen nicht beliebig gesteigert werden. Zur Erhaltung einer ausreichenden Genauigkeit ist eine besonders massive Konstruktion von Führungsvorrichtungen notwendig, so dass auch bei größeren Verfahrwegen die Genauigkeit keineswegs sinkt. Je größer das herzustellende Bauteil wird, desto höher wird auch der mechanische Aufwand, diese Genauigkeit beizubehalten. Nach ökonomischen Gesichtspunkten sind die Bauteilgrößen, welche sinnvollerweise mit solchen Vorrichtungen hergestellt werden können, begrenzt.

Die WO2017143063A1 offenbart sogenannte als Fertigungsroboter ausgebildete Addibots, die vorrangig für die Anwendung einer Additiven Fertigung hergenommen werden. Diese Addibots bieten aber auch die Möglichkeit Faserverbundmaterial durch Ablegen von Fasermaterial auf eine Oberfläche herzustellen. Dabei arbeiten die Addibots vorrangig autonom und/oder in Informationsaustausch untereinander oder mit einem festen Kommunikationssystem.

Die DE102015100102A1 offenbart eine Fertigungsanlage zur Herstellung eines Fasergelegeaufbaus mit einer formgebenden Werkzeugoberfläche, die auch befahrbar ist, und zumindest einer mobilen Robotereinheit. Die Robotereinheit ist ausgebildet, Fasermaterial auf der formgebenden Werkzeugoberfläche abzulegen. Dabei kann sich die Robotereinheit frei auf dieser Oberfläche bewegen.

Die EP3173218A1 offenbart eine Vorrichtung zum Herstellen eines Faserverbundbauteils mit einem formgebenden Werkzeug und einer Mehrzahl an mechanisch voneinander unabhängigen Ablegeeinheiten. Die Ablegeeinheiten sind ausgebildet, ein Fasermaterial auf dem Werkzeug abzulegen.

### ZUSAMMENFASSUNG DER ERFINDUNG

Es ist folglich eine Aufgabe der Erfindung, ein System zum Herstellen von Bauteilen aus einem Faserverbundwerkstoff vorzuschlagen, das möglichst leicht skalierbar ist und eine Bearbeitung größerer Bauteile ohne grundlegende Modifikation erlaubt.

Die Aufgabe wird gelöst durch ein System mit den Merkmalen des unabhängigen Anspruchs 1. Vorteilhafte Weiterbildungen und Ausführungsformen sind den Unteransprüchen und der nachfolgenden Beschreibung zu entnehmen.

Es wird ein System zum Herstellen eines Bauteils aus einem Faserverbundmaterial vorgeschlagen, das System aufweisend ein Formwerkzeug, eine Steuereinheit und eine Vielzahl von voneinander unabhängigen Materialauftrageinheiten, wobei jede Materialauftrageinheit einen Materialspeicher zum Bereitstellen von Fasern, eine Materialabgabevorrichtung zum Abgeben von Fasern aus dem Materialspeicher und eine Vortriebseinrichtung aufweist und dazu ausgebildet ist, mit Hilfe der Vortriebseinrichtung einer vorgegebenen Bahn auf dem Formwerkzeug zu folgen und dabei bedarfsweise Fasern abzugeben, wobei die Steuereinheit dazu ausgebildet ist, die Materialauftrageinheiten durch Vorgeben mehrerer individueller Bahnen anzusteuern, und wobei die Steuereinheit dazu ausgebildet ist, durch Ansteuern der Materialauftrageinheiten mindestens eine Lage von Fasergelegen auf dem Formwerkzeug zu erzeugen. Die Steuereinheit weist ferner eine optische Projektionseinheit auf, wobei die Projektionseinheit dazu ausgebildet ist, vorgegebene Bahnen auf das Formwerkzeug zu projizieren und wobei die Materialauftrageinheiten dazu ausgebildet sind, jeweils einer vorgegebenen Bahn zu folgen.

Das Formwerkzeug ist eine Vorrichtung, die eine Auflagefläche aufweist, auf der das gewünschte Bauteil lagenweise, d.h. in Form von Fasergelegen, auflegbar ist. Nach einer anschließenden Aushärtung liegt das Bauteil vor. Die Auflagefläche weist folglich eine Struktur bzw. Form auf, welche bevorzugt einer äußeren Oberfläche des herzustellenden Bauteils entspricht. Das Formwerkzeug erstreckt sich folglich mindestens über die gesamte Fläche des herzustellenden Bauteils.

Die Materialauftrageinheiten sind individuelle, mehrfach vorhandene Vorrichtungen, die eigenständig über das Formwerkzeug bewegbar sind. Dies bedeutet, dass die Materialauftrageinheiten dazu ausgebildet sind, auf dem Formwerkzeug entlang vorgegebener Bahnen zu fahren. Insbesondere sind sie nicht auf andere, externe Vorrichtungen angewiesen, um ihre Bewegung auszuführen. Es ist allerdings vorstellbar, dass die Steuereinheit dazu ausgebildet ist, eine Positionsreferenz vorzugeben, an der sich die Materialauftrageinheiten orientieren.

Durch den Materialspeicher ist jede Materialauftrageinheit dazu ausgebildet, bei der Bewegung auf dem Formwerkzeug Fasermaterial abzulegen. Befindet sich zu Beginn eines Vorgangs noch kein Material auf dem Formwerkzeug, kann eine Materialauftrageinheit folglich auf einer freien Oberfläche des Formwerkzeugs entlang vorgegebener Bahnen fahren, wobei während der Verfahrbewegung Material abgegeben werden kann. Es ist nicht zwangsläufig notwendig, dass jede Materialauftrageinheit bei ihrer Bewegung stets Material abgibt. Vielmehr sind die Funktionen des Bewegens und des Abgebens unabhängig voneinander zu betrachten, da eine Materialauftrageinheit auch beispielsweise von einem bestimmten Flächenabschnitt zu einem anderen Flächenabschnitt fahren können soll, ohne kontinuierlich zwischen den beiden Flächenabschnitten Material abzugeben.

Die Steuereinheit ist dazu ausgebildet, die Materialauftrageinheiten zu steuern. Dies bedeutet, dass die Steuereinheit dazu ausgebildet ist, basierend auf einer vorbestimmten Struktur oder Topologie eines geplanten Bauteils einzelne Bahnen festzulegen, die von den Materialauftrageinheiten abgefahren werden müssen, um das gewünschte Bauteil herstellen zu können. Insbesondere ist die Steuereinheit dazu ausgebildet, eine zeitliche Abfolge von abzufahrenden Bahnen vorzugeben, die unterschiedlich ausgerichtet sein können, so dass ein Lagenaufbau mit unterschiedlich ausgerichteten Fasern entstehen kann. Die Steuereinheit kann dazu ausgebildet sein, mehrere Materialauftrageinheiten parallel zueinander anzusteuern, so dass auch mehrere Materialauftrageinheiten, welche in einem besonderen Fall sämtliche Materialauftrageinheiten umfassen können, auf dem Formwerkzeug bewegt werden.

Das erfindungsgemäße System schlägt folglich eine Art Schwarm von vergleichsweise kleinen Materialauftrageinheiten vor, die sich auf dem Formwerkzeug unabhängig voneinander bewegen können und dabei Bahnen folgen, die von der Steuereinheit vorgegeben sind und hierbei Fasermaterial abgeben. Eine Größe des herzustellenden Bauteils kann folglich sehr leicht skaliert werden, indem das Formwerkzeug an die gewünschte Größe und Form des Bauteils angepasst wird und bei Bedarf mehr oder weniger Materialauftrageinheiten eingesetzt werden. Eine aufwändige strukturelle Versteifung beispielsweise eines Führungsrahmens, an der eine Materialauftragvorrichtung gelagert ist, ist nicht erforderlich, wenn die Größe des herzustellenden Bauteils steigt. Vielmehr ist eine gleichbleibende Präzision zu erwarten, wenn die Steuereinheit jeder Materialauftrageinheit als Positionsreferenz dient oder eine Positionsreferenz bereitstellen kann.

Die notwendige elektronische Ausstattung einer Materialauftrageinheit kann aus diesem Grunde stark vereinfacht werden. Eine Materialauftrageinheit kann insbesondere mit optischen Sensoren ausgestattet werden, um einer vorgegebenen Bahn, die auf das Formwerkzeug projiziert wird, zu folgen. Eine aufwändige Elektronik zur Navigation einzelner Materialauftrageinheiten auf dem Formwerkzeug kann vermieden werden. Lediglich die Steuereinheit muss dazu ausgestattet sein, räumlich exakt definierte Bahnen auf dem Formwerkzeug vorzugeben, denen die Materialauftrageinheiten folgen müssen. Dadurch wird auch die Skalierung erleichtert, denn eine gleichbleibende Genauigkeit kann gewährleistet werden. Es ist des Weiteren denkbar, neben lediglich einer Projektionseinheit auch mehrere Projektionseinheiten vorzugeben, die sämtlich mit der Steuereinheit verbunden sind und räumlich entlang des Formwerkzeugs verteilt sind. Durch eine bevorzugt einmalige Kalibrierung der Projektionseinheiten zueinander und zu dem Formwerkzeug hin kann eine lineare Erweiterung der Größe des herzustellenden Bauteils erreicht werden. Die optische Projektionseinheit stellt eine räumlich fixierte Positionsreferenz dar, von der ausgehend die vorgegebenen Bahnen auf das Formwerkzeug projiziert werden.

In einer ebenso vorteilhaften Ausführungsform ist die Steuereinheit dazu ausgebildet, eine Projektion der vorgegebenen Bahnen jeweils auf eine begrenzte Ausdehnung um eine dazugehörige Materialauftrageinheit zu beschränken. Damit können die von der Projektionseinheit projizierten Strichlängen begrenzt werden, was die Effizienz der Projektionseinheit erhöht.

In einer bevorzugten Ausführungsform ist die mindestens eine Projektionseinheit dazu ausgebildet, eine vorgegebene Bahn mittels eines Laserstrahls auf das Formwerkzeug zu projizieren. Die Verwendung eines Laserstrahls führt zu einer guten Sichtbarkeit einer Projektion, sowie einer ausreichenden Genauigkeit aufgrund der positiven Eigenschaften des Laserstrahls.

Die Materialauftrageinheiten können eine elektrische Vortriebseinrichtung, eine damit koppelbare Batterie und eine Bahnsteuerungseinheit aufweisen, wobei die Bahnsteuerungseinheit dazu ausgebildet ist, die elektrische Vortriebseinrichtung zum Folgen einer vorgegebenen Bahn anzusteuern. Die elektrische Vortriebseinrichtung kann mindestens einen Elektromotor aufweisen. Die Vortriebseinrichtung könnte einen differenziellen Antrieb bereitstellen, der zu einer Durchführung von Kurvenfahrten geeignet ist. Es kann sich anbieten, zwei Antriebsräder jeweils mit einem Elektromotor zu koppeln, so dass durch individuelles Ansteuern der beiden Elektromotoren bedarfsweise Kurvenfahrten durchführbar sind. Allerdings wäre auch denkbar, ein oder zwei lenkbare Räder vorzusehen, so dass lediglich ein Antriebsrad oder zwei über eine Achse verbundene Antriebsräder zur Kopplung mit einem einzelnen Elektromotor ausreichen. Die Batterie kann auf einer von mehreren unterschiedlichen Technologien basieren und sollte möglichst ausreichend sicher gekapselt sein, um Schäden an einem Fasergelege zu vermeiden, wenn sie einen Defekt aufweist. Das Gewicht der einzelnen Materialauftrageinheiten ist nicht von hoher Bedeutung, so dass keine Batterien mit einer hohen Energiedichte eingesetzt werden müssen.

Besonders bevorzugt weisen die Materialauftrageinheiten jeweils mindestens eine optische Erfassungseinrichtung auf, die jeweils mit der zugehörigen Bahnsteuerungseinheit gekoppelt ist, wobei die Bahnsteuerungseinheit dazu ausgebildet ist, einer von der Erfassungseinrichtung erfassten optischen Projektion einer Bahn zu folgen. Es sind verschiedene Varianten für eine Erfassungseinrichtung denkbar. Es sind einfache Bahnführungslogiken bekannt, die etwa lediglich zwei Fotodioden erfordern, um der vorgegebenen Bahn zu folgen. Zur Erreichung einer höheren Genauigkeit ist vorstellbar, eine Kamera und insbesondere eine hochauflösende Kamera einzusetzen, damit auch feinste Abweichungen einer Bewegungsbahn von einer vorgegebenen Bahn verhindert werden können. Die optische Projektion einer Bahn könnte sich etwa auf eine dünne Linie beschränken, auf der sich die Materialauftrageinheit mittig befindet. Die Vortriebseinrichtung wird so angesteuert, dass die Materialauftrageinheit stets mittig auf einer beliebig geformten Bahn verbleibt.

Die einzelnen Materialauftrageinheiten könnten weiterhin mit einer Kollisionsvermeidungseinrichtung ausgestattet sein. Diese ist dazu ausgebildet, eine Kollision zwischen mehreren Materialauftrageinheiten auf dem Formwerkzeug zu vermeiden. Dies könnte beispielhaft dadurch realisiert sein, dass jede Materialauftrageinheit mit Abstandssensoren ausgestattet ist. Diese könnten beispielsweise auf einer Ultraschallmessung basieren. Andererseits könnte auch eine bereits vorhandene optische Erfassungseinrichtung, insbesondere eine Kamera, dazu eingesetzt werden, andere Materialauftrageinheiten vor einer potentiellen Kollision zu erkennen. Dies könnte dadurch verbessert werden, dass alle Materialauftrageinheiten mit einer optisch auffälligen Kennzeichnung versehen sind, welche durch eine Kamera leicht erkennbar ist.

Jede Materialauftrageinheit könnte mit einer ersten optischen Erfassungseinrichtung ausgestattet sein. Diese könnte beispielsweise nach vorne, d.h. in Fahrtrichtung, angeordnet sein. Damit wird direkt die vorgegebene Bahn erkannt und dieser wird gefolgt.

Weiterhin könnte jede Materialauftrageinheit eine zweite optische Erfassungseinrichtung aufweisen, die nach hinten, d.h. entgegen der Fahrtrichtung, angeordnet ist. Damit kann eine noch höhere Präzision der Bahnfolgeregelung erreicht werden. Zudem könnte mit dieser zweiten optischen Erfassungseinrichtung eine optische Sichtprüfung des aufgebrachten Materials durchgeführt werden. Dies kann durch die projizierte Bahn unterstützt werden.

Jede Materialauftrageinheit könnte zudem eine Positionskorrektureinrichtung aufweisen, die mit der Materialabgabevorrichtung gekoppelt ist. Je nach geforderter Toleranz kann diese Positionskorrektureinrichtung die mindestens eine Materialabgabevorrichtung in ihrer Position, insbesondere eine laterale Position, relativ zu dem übrigen Teil der Materialauftrageinheit korrigieren. Die Präzision der Bahnführung kann dadurch gesteigert werden.

In einer besonders vorteilhaften Ausführungsform ist die Steuereinheit dazu ausgebildet, mehrere optische Symbole auf das Formwerkzeug zu projizieren, wobei die Bahnsteuerungseinheit der Materialauftrageinheiten jeweils dazu ausgebildet ist, von der Erfassungseinrichtung erfasste optische Symbole zu erkennen und damit zugeordnete Steuerbefehle umzusetzen. Hierdurch kann sämtlichen Materialauftrageinheiten sehr leicht ein Steuerbefehl zugeordnet werden, der außerdem von einem Fortschritt der Bahnführung abhängig gemacht werden kann. Die Materialauftrageinheiten könnten hierzu beispielsweise jeweils einen Speicher mit einer vorgegebenen Gruppe von Steuerbefehlen aufweisen, die jeweils einem eindeutig identifizierbaren Symbol zugeordnet werden. Jede Bahn, die von der Projektionseinheit auf das Formwerkzeug projiziert wird, könnte dazu mit mindestens einem zusätzlichen Symbol versehen sein. Beispielhaft betreffen die Steuerbefehle das Anhalten der Materialauftrageinheit am Ende einer bestimmten Bahn, den Start einer Materialabgabe, das Ende einer Materialabgabe, das kurzfristige Pausieren zum Passieren anderer Materialauftrageinheiten, und viele andere Steuerbefehle. Durch die optische Projektion von Steuerbefehlen können Benutzer oder Bedienpersonal zudem sehr intuitiv feststellen, ob das System einwandfrei funktioniert. Durch die optische Projektion der Steuerbefehle entsteht weiterhin kein Datenverkehr in einem drahtlosen Netzwerk. Ein weiterer Vorteil liegt darin, dass die Materialauftrageinheiten leicht austauschbar sind, denn ihre Identifikation in einem drahtlosen Netzwerk ist nicht notwendig und sie müssen lediglich einer bestimmten Bahn folgen.

Bevorzugt weisen die Materialauftrageinheiten jeweils eine erste Kommunikationseinrichtung auf, wobei die Steuereinheit eine zweite Kommunikationseinrichtung aufweist, und wobei die Materialauftrageinheiten dazu ausgebildet sind, Zustandsdaten über die erste und zweite Kommunikationseinrichtung an die Steuereinheit zu senden. Hierdurch entsteht die Möglichkeit, Signale von den Materialauftrageinheiten an die Steuereinheit zu übertragen, wenn es notwendig ist. Jede Materialauftrageinheit könnte der Steuereinheit folglich eine Information darüber senden, dass die Kapazität einer Batterie nahezu erschöpft ist, oder dass der Materialspeicher auszutauschen ist. Insbesondere in Verbindung mit der rein optischen Übertragung von Steuerbefehlen bleibt ein Datenkanal frei, um substantielle Daten zu übertragen.

Die Steuereinheit ist bevorzugt dazu ausgebildet, über die erste und die zweite Kommunikationseinrichtung Steuerbefehle an die Materialauftrageinheiten zu senden. Es ist vorstellbar, dass die Steuereinheit bevorzugt nur systemübergreifende Steuerbefehle hierüber aussendet. Dies geschieht bevorzugt an sämtliche Materialauftrageinheiten, etwa in Form eines Broadcast. Systemübergreifende Steuerbefehle können etwa das Unterbrechen der Bewegung sämtlicher Materialauftrageinheiten beinhalten.

In einer bevorzugten Ausführungsform weist der Materialspeicher mindestens eine Spule zum Abgeben von Fasermaterial auf. Die Spule kann mit einer vorgegebenen Menge an Fasermaterial ausgestattet sein. Dieses könnte in Form eines endlosen, vorimprägnierten Bandes realisiert sein. Es ist vorstellbar, dass in diesem Fall die Materialabgabevorrichtung auch eine Schneidvorrichtung aufweist, um am Ende einer vorgegebenen Bahn das Fasermaterial zu schneiden. Es ist allerdings auch denkbar, dass die Spule mit Fasermaterial ausgestattet wird, das in Form einzelner Abschnitte mit vorbestimmten Längen realisiert ist. Hierzu ist die Steuereinheit bevorzugt ausgebildet, die vorzugebenden Bahnen der entsprechenden Materialauftrageinheit so zu planen, dass nacheinander die auf dem Materialspeicher vorliegenden Abschnitte abgelegt werden.

In einer besonders bevorzugten Ausführungsform weist der Materialspeicher eine erste Spule und eine zweite Spule auf, wobei die erste Spule ein Materialträgerband mit einem darauf angeordneten Fasermaterial aufweist, wobei das Materialträgerband von der ersten Spule abgebbar und von der zweiten Spule aufnehmbar ist, und wobei das Materialträgerband an einer Umlenkvorrichtung als Materialabgabevorrichtung vorbeigeführt und in Kontakt mit dem Formwerkzeug oder einem darauf befindlichen Fasergelege bringbar ist. Folglich wird das Materialträgerband von der ersten Spule zu der zweiten Spule hin transportiert, ähnlich wie bei einer Tonbandkassette. Die Materialabgabevorrichtung ist dabei als eine Umlenkvorrichtung zwischen den beiden Spulen realisiert, in der das Materialträgerband eine starke Umlenkung, insbesondere um mehr als 90°, erfährt. Dadurch kann sich das Fasermaterial, das auf das Materialträgerband geheftet ist, lösen, um abgelegt zu werden. Die Umlenkvorrichtung ist zum Abgeben des Materials entsprechend auf das Formwerkzeug bzw. das darauf befindliche Fasergelege zu drücken. Um eine Materialabgabe zu unterbrechen oder zu beenden, wird die Umlenkvorrichtung bzw. die Materialabgabevorrichtung von dem Formwerkzeug oder dem darauf befindlichen Fasergelege durch ein Abheben entfernt.

Die erste Spule könnte von einem Elektromotor angetrieben werden. Dieser könnte sich direkt in dem Materialspeicher befinden oder zu einem außerhalb liegenden Abschnitt der Materialauftrageinheit gehören. Die zweite Spule könnte von einem unabhängigen Elektromotor oder über ein entsprechendes Getriebe angetrieben werden. Es sollte dabei sichergestellt werden, dass ein ausreichendes Drehmoment zum Aufwickeln des Materialträgerbandes erreicht wird. Ein Ratschenmechanismus könnte verhindern, dass eine Rotation in einer umgekehrten Richtung erfolgt.

Der Materialspeicher kann bevorzugt mit mindestens zwei Sensoren ausgestattet werden. Ein erster Sensor ist dazu ausgebildet, eine Materialspannung unmittelbar vor der Umlenkvorrichtung zu messen. Ein zweiter Sensor ist bevorzugt dazu ausgebildet, den Beginn des auf dem Materialträgerband gehefteten Fasermaterials kurz vor der Umlenkvorrichtung festzustellen. Dies könnte durch eine Lichtschranke, eine Kamera oder eine Fotodiode erreicht werden.

Weiterhin wäre ein dritter Sensor denkbar, der die Spannung des Materialträgerbandes nach der Umlenkvorrichtung misst und einen Elektromotor, der mit der zweiten Spule gekoppelt ist, ansteuert.

Bei der Materialabgabe ist besonders vorteilhaft, dass das Materialträgerband kontrolliert zwischen den beiden Spulen bewegt wird, um eine Spannung auf das abzugebende Fasermaterial zu minimieren. Insbesondere ist die Bewegung des Materialträgerbandes an die Bewegung der Materialauftrageinheit auf dem Formwerkzeug oder dem darauf befindlichen Fasergelege abzustimmen. Das Fasermaterial sollte möglichst spannungsfrei abgelegt werden.

Nach einer erfolgten Materialabgabe wird der mindestens eine Materialspeicher von dem Formwerkzeug oder dem darauf befindlichen Fasergelege abgehoben. Hiernach wird bevorzugt das Materialträgerband so weit transportiert, dass ein Anfang eines weiteren Materialabschnitts an der Umlenkvorrichtung vorliegt. Damit ist die Materialabgabevorrichtung dazu eingerichtet, nach dem erneuten Absenken auf das Formwerkzeug oder ein darauf befindliches Fasergelege eine nächste Materialbahn bzw. den nächsten Materialabschnitt des Fasermaterials abzulegen.

Der Materialspeicher könnte auswechselbar an der Materialauftrageinheit angeordnet sein, wobei die Steuereinheit mit einer Materialhandhabungseinheit gekoppelt ist, welche dazu ausgebildet ist, den Materialspeicher mindestens eines der Materialauftrageinheiten bedarfsweise auszutauschen. Eine Materialauftrageinheit könnte etwa einen Materialspeicher aufweisen, der eine vorbestimmte Menge eines Fasermaterials in vorgeschnittenen Abschnitten aufweist. Ist dieser Materialspeicher nach einer gewissen Anzahl von Ablegevorgängen erschöpft, kann die Materialauftrageinheit zu der Materialhandhabungseinheit verfahren, um dort mit einem gefüllten Materialspeicher ausgestattet zu werden. An dieser Stelle ist darauf hinzuweisen, dass die Materialabgabevorrichtung mit dem Materialspeicher verbunden sein kann, so dass beim Austauschen des Materialspeichers auch die Materialabgabevorrichtung ausgetauscht ist.

Der Materialspeicher kann einen Datenspeicher aufweisen, der mit einer Regeleinheit der Materialauftrageinheit gekoppelt ist. Der Datenspeicher kann für unterschiedliche Zwecke verwendet werden. Zum einen können darin Daten einer Missionssequenz abgelegt werden. Die Missionssequenz könnte beispielsweise eine Folge von Informationen über Abzweigungen oder andere Richtungswechsel aufweisen. Dadurch kann die Steuereinheit entlastet werden und müsste weniger positionsabhängige Daten projizieren, die zu einem Richtungswechsel der Materialauftrageinheiten führen. Zum anderen können während des Ablegens erfasste Daten, optional auch mit teilweiser oder vollständiger Bilderfassung, auf dem Datenspeicher zur nachträglichen Auswertung und Rückverfolgbarkeit abgespeichert und anschließend in der Steuereinheit oder einer damit verbundenen Einrichtung abgerufen und konsolidiert werden.

Besonders bevorzugt ist die Materialhandhabungseinheit dazu ausgebildet, einen Materialspeicher mit Fasermaterial zu befüllen. Sowohl das Befüllen mit Fasermaterial als endloses Band als auch das Befüllen mit vorgeschnittenen Abschnitten ist denkbar. Die Steuereinheit kann in diesem Zusammenhang ferner dazu ausgebildet sein, einen Ablauf des Ablegevorgangs so zu planen, dass die Materialauftrageinheiten stets mit einer korrekten Anzahl von vorgeschnittenen Abschnitten versorgt werden, die in einem vorgesehenen Abschnitt mit den von der betreffenden Materialauftrageinheit abzufahrenden Bahnen fehlen.

Auf die gleiche Weise kann eine Batteriehandhabungseinheit realisiert sein, die von einer Materialauftrageinheit angefahren werden könnte, um einen Austausch einer Batterie durchzuführen.

Bevorzugt weist das Formwerkzeug eine Bearbeitungsfläche und eine die Bearbeitungsfläche umgebende Randfläche auf, wobei die Randfläche derart dimensioniert ist, dass mehrere Materialauftrageinheiten nebeneinander auf der Randfläche stehen können und ein Passieren weiterer Materialauftrageinheiten ausschließlich auf der Randfläche möglich ist. Da nicht permanent alle Materialauftrageinheiten Material ablegen, kann es erforderlich sein, dass eine gewisse Anzahl von Materialauftrageinheiten auf der Randfläche parken. Es ist weiterhin zeitweise damit zu rechnen, dass Materialauftrageinheiten zwischen zwei Abschnitten des Formwerkzeugs hin- und herfahren, so dass diese auch zwischen der Bearbeitungsfläche und den parkenden Materialauftrageinheiten vorbeifahren können. Die Randfläche umgibt insbesondere vollständig, d.h. entlang einer geschlossenen Strecke, die Bearbeitungsfläche.

Schließlich könnte das System eine Überarbeitungseinrichtung aufweisen, die dazu ausgebildet ist, eine fehlerhafte Materialbahn von dem Formwerkzeug oder einem darauf befindlichen Fasergelege abzulösen. Die Steuereinheit könnte etwa durch Verifikation mittels einer zweiten optischen Erfassungseinrichtung feststellen, dass eine Materialbahn nicht exakt einer vorgegebenen Bahn folgt. Dann könnte die Überarbeitungseinrichtung diese angeheftete Materialbahn wieder ablösen, indem die Materialauftrageinheit in umgekehrter Richtung verfährt und dabei die Materialbahn ablöst. Die Überarbeitungseinrichtung kann etwa einen Keil aufweisen, der sich zwischen das Formwerkzeug und die betreffende Materialbahn schiebt und dabei eine Ablösekraft ausübt. Der Keil könnte beheizt sein und/oder durch Ultraschall vibrieren. Ein zusätzlicher Greifer könnte die Ablösung unterstützen. Zudem wäre denkbar, durch eine gezielte Kühlung lokal die Haftkraft zwischen der Materialbahn und dem Formwerkzeug zu beeinflussen.

Weisen die Materialauftrageinheiten eine zweite optische Erfassungseinrichtung auf, ist es besonders vorteilhaft, wenn die Materialauftrageinheiten zusätzlich eine Bildauswertungseinheit aufweisen. Diese könnte dazu ausgebildet sein, den Zustand des abgelegten Fasermaterials, welches in den Erfassungsbereich der zweiten optischen Erfassungseinrichtung fällt, zu überprüfen. Dabei kann eine Position einer abgelegten Materialbahn relativ zu einer vorgegebenen Bahn, die die Referenz bildet, ermittelt werden. Damit kann eine für die Überarbeitung notwendige Ansteuerung der Überarbeitungseinrichtung initiiert werden, falls eine nicht tolerierbare Abweichung festgestellt wird. Die tolerierbare Abweichung könnte in Form einer Maßtoleranz vorgegeben werden. Die Maßtoleranz könnte eine maximale Abweichung einer gelegten Bahn von einer vorgegebenen Bahn als ein absolutes Maß, z.B. 0,1 mm oder ein anderer Wert, definieren.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 zeigt eine schematische Darstellung eines erfindungsgemäßen Systems.
Fig. 2 zeigt eine exemplarische Darstellung einer Materialauftrageinheit in einer dreidimensionalen Ansicht.
Fig. 3 zeigt einen Teilschnitt eines Materialspeichers.
Fig. 4 zeigt eine Draufsicht auf ein Formwerkzeug 4 mit darauf projizierten, vorgegebenen Bahnen.
Fig. 5 zeigt einige Beispiele von Symbolen zum Ansteuern von Materialauftrageinheiten.
Fig. 6 zeigt eine Überarbeitungseinrichtung in einer schematischen Darstellung.
Fig. 7 zeigt eine blockbasierte Darstellung des erfindungsgemäßen Systems.
Fig. 8 zeigt schließlich eine mögliche Abfolge von Schritten zum Ablegen von Fasermaterial.

### DETAILLIERTE DARSTELLUNG EXEMPLARISCHER AUSFÜHRUNGSFORMEN

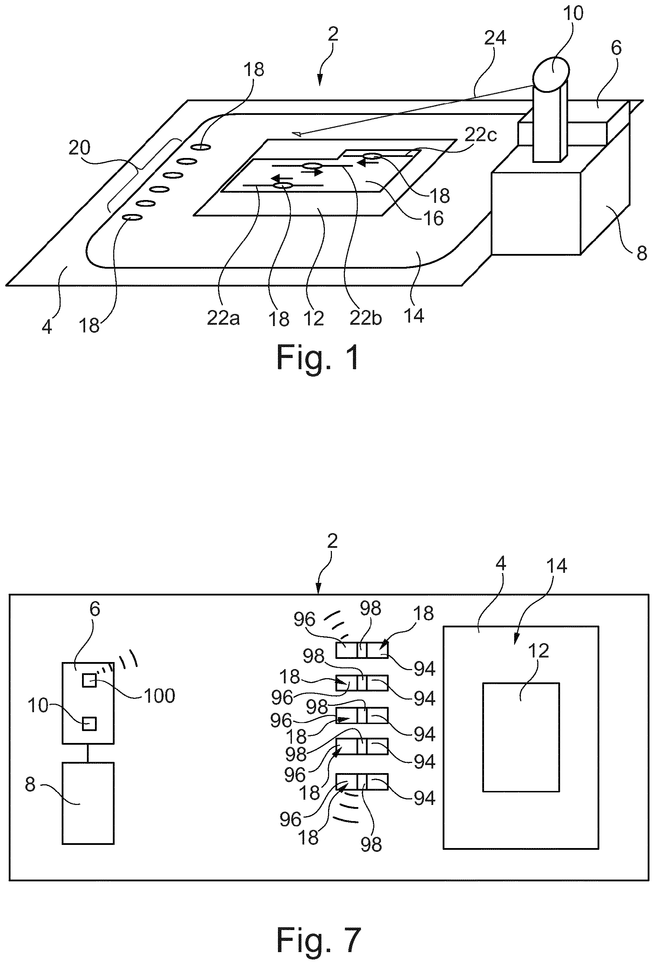

Fig. 1 zeigt eine sehr schematische Darstellung eines erfindungsgemäßen Systems 2 zum Herstellen eines Bauteils aus einem Faserverbundmaterial. Das System 2 beinhaltet ein Formwerkzeug 4, eine Steuereinheit 6 und eine Materialhandhabungseinheit 8. Die Steuereinheit 6 weist exemplarisch eine Projektionseinheit 10 auf. Das Formwerkzeug 4 weist eine Bearbeitungsfläche 12 und eine die Bearbeitungsfläche umgebende Randfläche 14 auf.

Auf der Bearbeitungsfläche 12 ist beispielhaft ein erstes Fasergelege 16 dargestellt. Das System 2 weist weiterhin mehrere voneinander unabhängige Materialauftrageinheiten 18 auf, die dazu ausgebildet sind, Material aus einem Materialspeicher auf der Bearbeitungsfläche 12 zum Herstellen eines Fasergeleges abzugeben. Die einzelnen Materialauftrageinheiten sind in unterschiedlichen Positionen dargestellt. Eine erste Gruppe 20 von Materialauftrageinheiten 18 ist etwa in der Zeichnungsebene in einem linken Bereich auf der Randfläche 14 angeordnet und führen zurzeit keine materialauftragenden Arbeiten aus.

Die Randfläche 14 ist derart dimensioniert, dass einzelne Materialauftrageinheiten 18 auf der Randfläche 14 auch an den parkenden Materialauftrageinheiten 18 der ersten Gruppe 20 oder einer anderen Gruppe passieren können, um zu der Bearbeitungsfläche 12 zu gelangen. Damit sind flexibel sämtliche Stellplätze außerhalb der Bearbeitungsfläche 12 erreichbar und verwendbar.

Auf der Bearbeitungsfläche 12 sind beispielhaft drei Materialauftrageinheiten 18 vorhanden, die jeweils einer vorgegebenen Bahn 22a, 22b, 22c folgen. Diese werden von der Projektionseinheit 10 auf das Formwerkzeug 4 projiziert und die Materialauftrageinheiten 18 sind dazu ausgebildet, diesen selbstständig zu folgen. In weiter nachfolgenden Figuren wird zusätzlich dargestellt, dass auch Steuerbefehle an die Materialauftrageinheiten 18 durch Projektion auf das Formwerkzeug 4 übermittelt werden können.

Die Zielsetzung des Systems 2 liegt darin, mithilfe der Projektionseinheit 10 beispielsweise mittels eines Laserstrahles 24 vorgegebene Bahnen und Steuerbefehle auf das Formwerkzeug 4 zu projizieren, um rein optisch Materialauftrageinheiten 18 zu steuern, so dass diese selbstständig auf dem Formwerkzeug 4 fahren und dabei Material nach Vorgabe der Steuereinheit 6 abgeben können. Die Größe des Formwerkzeugs 4 bzw. der Bearbeitungsfläche 12 kann durch diese Technik beliebig vergrößert werden, ohne dass besonders aufwändige, mechanisch starre Führungseinrichtungen notwendig wären, die größere Verfahrwege realisieren können und dabei eine gleichbleibende Präzision aufweisen. Eine Vergrößerung der Bearbeitungsfläche 12 geht bei dem erfindungsgemäßen System 2 nicht mit einer Reduktion der Präzision einher, da diese lediglich von der Projektionseinheit 10 abhängt. Es wäre denkbar, auch mehrere Projektionseinheiten 10 einzusetzen, die außerhalb des Formwerkzeugs 4 verteilt werden und dabei eine noch größere Fläche mit entsprechenden Projektionen versehen können.

Die einzelnen Materialauftrageinheiten 18 sind jeweils mit einem auswechselbaren Materialspeicher (hier nicht gezeigt) ausgestattet. Ist dieser durch Auftragen des Materials entleert, kann die betreffende Materialauftrageinheit 18 zu der Materialhandhabungseinheit 8 fahren, um dort einen Austausch des Materialspeichers durchzuführen.

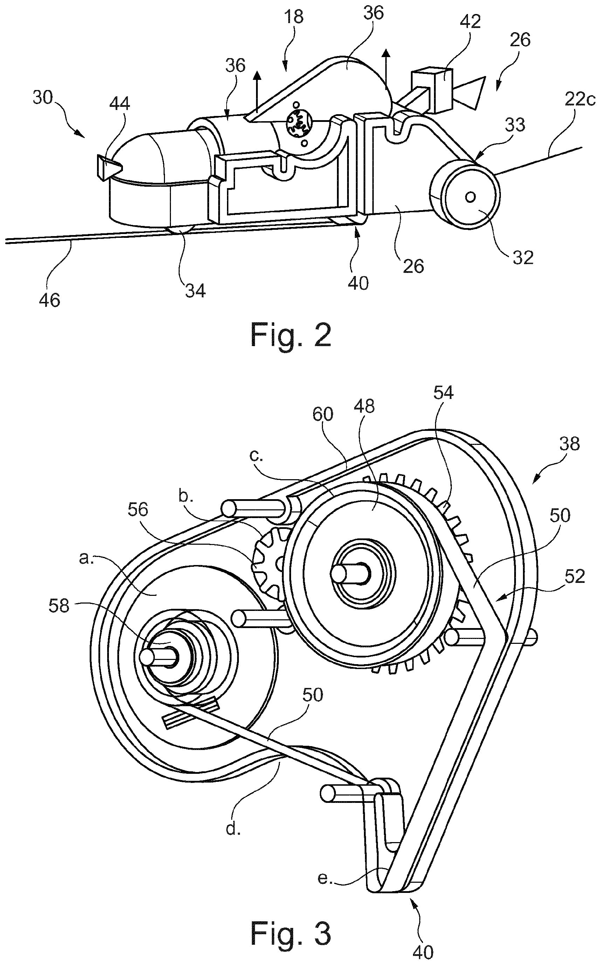

Fig. 2 zeigt eine beispielhafte Ausführung einer Materialauftrageinheit 18. Diese ist selbstverständlich lediglich eine von vielen denkbaren Ausführungen. Die Materialauftrageinheit 18 weist ein Fahrgestell 26 auf, welches eine Vorderseite 28 und eine Rückseite 30 aufweist. An der Vorderseite 28 sind zwei Vorderräder 32 vorgesehen, die differenziell antreibbar sind und zusammen mit einem oder zwei nicht gezeigten Elektromotoren eine Vortriebseinrichtung 33 bilden. An der Rückseite 30 ist indes ein einzelnes Hinterrad 34 positioniert. Durch das differenzielle Antreiben der Vorderräder 32 kann die Materialauftrageinheit 18 gekrümmte Fahrwege zurücklegen und damit beispielsweise der Bahn 22c folgen.

Die Materialauftrageinheit 18 weist eine Aufnahme 36 auf, in der ein auswechselbarer Materialspeicher 38 angeordnet ist. Dieser weist ferner eine Materialabgabevorrichtung in Form einer Umlenkvorrichtung 40 auf, die dazu ausgebildet ist, Material abzugeben. Wie hier erkennbar ist, ragt der Materialspeicher 38 vollständig durch die Materialauftrageinheit 18 durch, so dass die Materialabgabevorrichtung 40 auf das Formwerkzeug 4 oder ein darauf befindliches Fasergelege auflegbar ist. Berührt die Materialabgabevorrichtung 40 das Formwerkzeug 4 oder ein darauf befindliches Fasergelege, kann von dieser Fasermaterial abgegeben werden. Durch Anheben des Materialspeichers 38 und damit der Materialabgabevorrichtung 40 kann die Materialabgabe unterbrochen werden. dies wird hier durch senkrechte Pfeile beidseits des Materialspeichers 38 angedeutet.

An der Vorderseite 28 ist ferner eine erste optische Erfassungseinrichtung 42 angeordnet, die dazu ausgebildet ist, die Bahn 22c optisch zu erfassen. In der Materialauftrageinheit 18 ist ferner eine hier nicht gezeigte Steuereinheit angeordnet, die dazu ausgebildet ist, die Vorderräder 32 zum Folgen der Bahn 22c differenziell anzusteuern. Hierzu ist die Steuereinheit dann mit der ersten optischen Erfassungseinrichtung 42 gekoppelt und dazu ausgebildet, einen Verlauf der Bahn 22c zu erfassen und aus dem Verlauf der Bahn 22c eine zum Folgen der Bahn 22c erforderliche Lenk- bzw. Verschwenkbewegung zu planen.

Exemplarisch ist an der Rückseite 30 eine zweite optische Erfassungseinrichtung 44 angeordnet, die dazu ausgebildet ist, den Verlauf einer abgelegten Materialbahn 46 zu erkennen. Die zweite optische Erfassungseinrichtung 44 kann ebenso mit der Steuereinheit gekoppelt sein und etwa zum Verifizieren einer Bahnfolgeregelung verwendet werden.

Die Materialauftrageinheit 18 kann ferner eine Batterie oder einen Akku aufweisen, der mit den elektrischen Komponenten gekoppelt ist. Dieser ist hier nicht gezeigt.

Fig. 3 zeigt eine Teilschnittdarstellung des auswechselbaren Materialspeichers 38. In diesem ist eine erste Spule 48 angeordnet, die ein Materialträgerband 50 mit einem darauf angeordneten Fasermaterial 52 aufweist. Die erste Spule 48 weist ein erstes Zahnrad 54 auf, das mit einem Ritzel 56 gekoppelt ist. Durch das Antreiben des Ritzels 56 kann folglich die erste Spule 48 angetrieben werden. Die erste Spule 48 ist dazu ausgebildet, das Fasermaterial 52 durch ein Abspulen des Materialträgerbands 50 abzugeben.

Der Materialspeicher 38 weist zudem eine zweite Spule 58 auf, die das Materialträgerband 50 aufnehmen kann. Die zweite Spule 58 kann durch einen hier nicht dargestellten Elektromotor angetrieben werden, der stets eine leichte Zugkraft auf das Materialträgerband 50 ausübt. Die Materialabgabevorrichtung 40 kann in Form einer lokalen, starken Umlenkung über einen Winkel von deutlich mehr als 90° realisiert werden. Hierdurch kann sich das Fasermaterial 52 von dem Materialträgerband 50 lösen. Das Fasermaterial 52 kann durch einen (schwachen) Klebstoff, insbesondere bei thermoplastischer Matrix, oder durch eine gewisse eigene Klebrigkeit, insbesondere bei der Verwendung von Prepregs, an das Materialträgerband 50 angeheftet sein. Durch die Umlenkung wird das Fasermaterial also von dem Materialträgerband 50 abgeschält.

Der Materialspeicher 38 wird durch ein Gehäuse 60 gekapselt und weist dadurch den Charakter einer Kassette auf. Dies ermöglicht, den Materialspeicher 38 in der Materialhandhabungseinheit 8 austauschen zu lassen. Die Materialhandhabungseinheit 8 kann für diesen Zweck mehrere gefüllte Materialspeicher 38 aufweisen und/oder dazu eingerichtet sein, leere Materialspeicher 38 selbsttätig zu befüllen. Dies ist insbesondere dann sinnvoll, wenn vorgeschnittene Abschnitte des Fasermaterials 52 abzugeben sind.

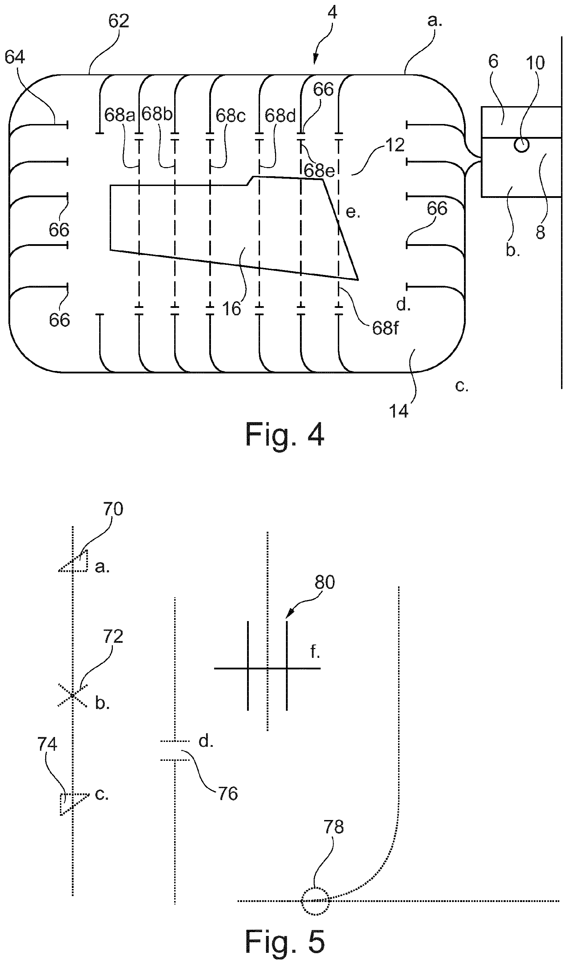

Fig. 4 zeigt eine Draufsicht auf das Formwerkzeug 4 mit der Bearbeitungsfläche 12 und der Randfläche 14 und demonstriert weiterhin anhand eines Beispiels ein auf das Formwerkzeug 4 projiziertes Muster. Beispielhaft wird eine statische Umfangslinie 62 gezeigt, an der mehrere Zweiglinien 64 angeordnet sind. Diese sind als Parkmarkierungen zu verstehen, an denen Materialauftrageinheiten 18 parken können, welche momentan nicht gebraucht werden.

Zur Markierung von Endpositionen weisen die Zweiglinien 64 jeweils eine Endlinie 66 auf. Damit wird den Materialauftrageinheiten 18 symbolisiert, dass an dieser Stelle angehalten werden soll. Auf der Bearbeitungsfläche 12 sind ferner Bahnlinien 68a, 68b, 68c, 68d, 68e und 68f vorgesehen, die beispielhaft parallel zueinander verlaufen. Damit wird den Materialauftrageinheiten 18 signalisiert, dass dieser Bahn 68a bis 68f gefolgt werden soll.

Beispielhaft ist an den Schnittstellen zu dem herzustellenden ersten Gelege 16 jeweils ein Dreieckssymbol vorgesehen, welches den Start bzw. das Ende einer Bearbeitungsbahn angibt. Mögliche Symbole sind beispielhaft in der nachfolgenden Fig. 5 gezeigt. Es ist vorstellbar, dass eine einzige Projektionseinheit 10 dazu ausgebildet ist, sämtliche dieser Linien anzugeben. Hierzu kann die Steuereinheit 6 dazu ausgebildet sein, für jede individuelle Materialauftrageinheit 18 eine individuelle Bahn zu planen und anschließend vorzugeben, so dass die betreffende Materialauftrageinheit 18 dieser dann folgt.

Fig. 5 zeigt beispielhaft mehrere Symbole, mit deren Hilfe eine Materialauftrageinheit angesteuert werden kann. Diese können ein Dreieck 70 umfassen, das den Start einer Bearbeitung angibt. Ein Kreuz bzw. X 72 könnte das Schneiden einer Materialbahn vorgeben. Ein Dreieck 74 könnte das Ende einer Bearbeitungsbahn angeben. Zwei voneinander beabstandete, senkrecht zu einer Bahn verlaufende Querlinien 76 geben beispielhaft das Einnehmen einer Wartestellung an. Ein Abzweigungspunkt kann durch eine zweite Linie und einen tatsächlichen Abzweigungspunkt 78 gekennzeichnet werden. Eine Bearbeitungsbreite kann ferner durch ein paar von parallel zu der jeweiligen Bearbeitungsbahn verlaufende Inspektionslinien 80 angegeben werden. Selbstverständlich sind eine Vielzahl weiterer Symbole möglich, mit deren Hilfe individuell die Materialauftrageinheiten 18 ansteuerbar sind. Für die Implementierung kann es günstig sein, Symbole einzusetzen, die sich aus einem einzigen Linienzug projizieren lassen.

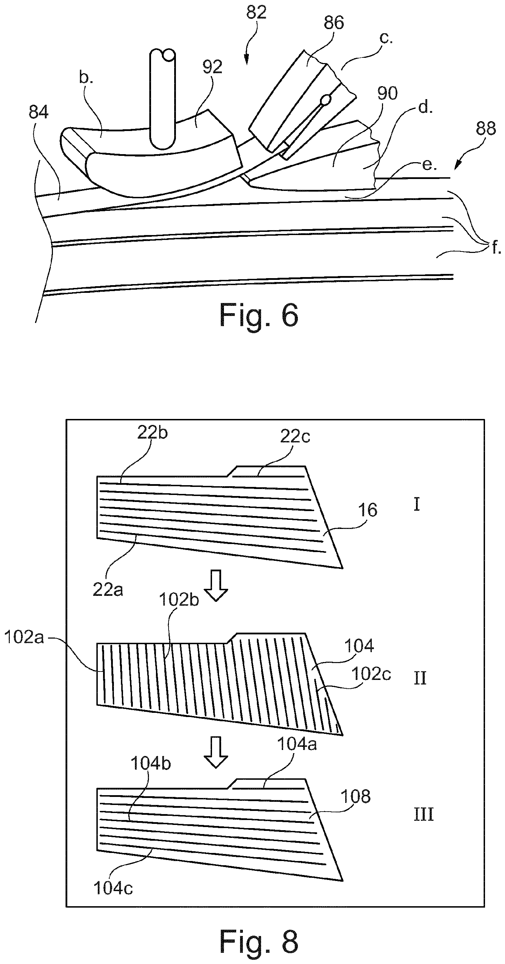

Wie weiter in Fig. 6 gezeigt, kann die Materialauftrageinheit 18 auch mit einer Überarbeitungseinrichtung 82 ausgerüstet sein, die eine fehlerhaft abgelegte Materialbahn 84 überarbeiten kann. Hierzu ist ein Greifer 86 vorgesehen, der die fehlerhafte Materialbahn 84 von einer Oberfläche 88 ablöst. Hierzu ist dieser von einem Keil 90 unterstützt, welcher beispielhaft durch Anwendung von Ultraschall zum Ablösen der fehlerhaften Materialbahn 84 führt. Zum Kühlen der fehlerhaften Materialbahn 84, um eine lokale Anhaftung zu reduzieren, kann ein Kühlgleiter 92 eingesetzt werden, der auf die Materialbahn 84 aufgedrückt wird. Beispielhaft kann durch die zweite optische Erfassungseinrichtung 44 festgestellt werden, wenn eine Materialbahn 46 fehlerhaft ist und folglich abzulösen ist.

Fig. 7 zeigt das System 2 in einer blockbasierten Darstellung. Hier sind die Steuereinheit 6 nebst Projektionseinheit 10 erkennbar, die mit der Materialhandhabungseinheit 8 gekoppelt ist. Die Steuereinheit 6 ist dazu ausgebildet, die Materialauftrageinheiten 18 durch Vorgeben mehrerer individueller Bahnen anzusteuern, so dass die Materialauftrageinheiten den individuellen Bahnen folgen, wie beispielsweise in Fig. 1 gezeigt. Damit ist die Steuereinheit 6 dazu ausgebildet ist, durch Ansteuern der Materialauftrageinheiten 18 mindestens eine Lage von Fasergelegen auf dem Formwerkzeug 4 auf der Bearbeitungsfläche 12 zu erzeugen. Zur Ansteuerung der Materialauftrageinheiten 18 ist die Steuereinheit 6 dazu ausgebildet, die Projektionseinheit 10 anzusteuern, dass mittels des Laserstrahls 24 oder ähnlichen Mitteln die vorgegebenen Bahnen auf das Formwerkzeug 4 zu projizieren.

Wie schematisch angedeutet weisen die Materialauftrageinheiten 18 jeweils eine Bahnsteuerungseinheit 94 auf, die dazu ausgebildet ist, die jeweilige Vortriebseinrichtung 33 zum Folgen einer vorgegebenen Bahn anzusteuern. Dazu ist diese mit der optischen Erfassungseinrichtung(-en) gekoppelt. Die Bahnsteuerungseinheit 94 kann in Form eines Algorithmus ausgebildet sein, der in die Steuereinheit 6 integriert ist. Alternativ dazu kann die Bahnsteuerungseinheit 94 auch in Form eines eigenständigen Steuergeräts realisiert sein.

Zudem weisen die Materialauftrageinheiten 18 jeweils eine Batterie 96 auf, die mit der Steuereinheit 6, der Bahnsteuerungseinheit 94 und der elektrischen Vortriebseinrichtung 33 gekoppelt ist. Die Batterie 96 kann ebenfalls austauschbar an der Materialauftrageinheit 18 gehaltert werden. Bei kritischer Kapazität kann ein automatischer Austausch an der Materialhandhabungseinheit 8 erfolgen.

In diesem Beispiel weisen die Materialauftrageinheiten 18 jeweils eine erste Kommunikationseinrichtung 98 auf. Diese ist mit einer zweiten Kommunikationseinrichtung 100 verbindbar, die in der Steuereinheit 6 angeordnet ist. Hierdurch kann vereinzelt zwischen der Steuereinheit 6 und den Materialauftrageinheiten 18 kommuniziert werden, während die Steuerung der Bewegung der Materialauftrageinheiten 18 über die optische Projektion erfolgt. Die Kommunikationseinrichtungen 98 und 100 können etwa auf der Verwendung von Funksignalen basieren und zum Übertragen von allgemeinen Steuerbefehlen und zum Übertragen von Statusinformationen eingesetzt werden. Die Materialauftrageinheiten 18 können etwa mitteilen, wenn die Kapazität ihrer Batterie 96 erschöpft ist oder wenn der Materialspeicher 38 leer ist. Die einzelnen Steuereinheiten 6 können dann veranlasst werden, die betreffende Materialauftrageinheit 18 zu der Materialhandhabungseinheit 8 zu fahren, um dort die Batterie 96 bzw. den Materialspeicher 38 auszutauschen.

Schließlich zeigt Fig. 8 eine sehr beispielhafte Abfolge von vorgegebenen Bahnen 22, 102 und 106 in drei Teilansichten I, II und III, die zur Herstellung des ersten Fasergeleges 16, eines zweiten Fasergeleges 104 und eines dritten Fasergeleges 108 von der Steuereinheit 6 den einzelnen Materialauftrageinheiten 18 vorzugeben sind. Selbstverständlich sind auch andere Bahnen denkbar, die je nach Gestaltung des herzustellenden Bauteils und unterschiedlichen lokalen und globalen Dicken variieren.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: System zum Herstellen eines Bauteils
- 4: Formwerkzeug
- 6: Steuereinheit
- 8: Materialhandhabungseinheit
- 10: Projektionseinheit
- 12: Bearbeitungsfläche
- 14: Randfläche
- 16: erstes Fasergelege
- 18: Materialauftrageinheit
- 20: erste Gruppe von Materialauftrageinheiten
- 22: vorgegebene Bahn (22a, 22b, 22c)
- 24: Laserstrahl
- 26: Fahrgestell
- 28: Vorderseite des Fahrgestells
- 30: Rückseite des Fahrgestells
- 32: Vorderrad
- 33: Vortriebseinrichtung
- 34: Hinterrad
- 36: Aufnahme
- 38: Materialspeicher
- 40: Materialabgabevorrichtung
- 42: erste optische Erfassungseinrichtung
- 44: zweite optische Erfassungseinrichtung
- 46: abgelegte Materialbahn
- 48: erste Spule
- 50: Materialträgerband
- 52: Fasermaterial
- 54: erstes Zahnrad
- 56: Ritzel
- 58: zweite Spule
- 60: Gehäuse
- 62: Umfangslinie
- 64: Zweiglinie
- 66: Endlinie
- 68: vorgegebene Bahn (68a, 68b, ..., 68f)
- 70: Dreieck als Steuerbefehl
- 72: Kreuz als Steuerbefehl
- 74: Dreieck als Steuerbefehl
- 76: Querlinie als Steuerbefehl
- 78: Abzweigungspunkt als Steuerbefehl
- 80: Inspektionslinien als Steuerbefehl
- 82: Überarbeitungseinrichtung
- 84: fehlerhaft abgelegte Materialbahn
- 86: Greifer
- 88: Oberfläche
- 90: Keil
- 92: Kühlgleiter
- 94: Bahnsteuerungseinheit
- 96: Batterie
- 98: erste Kommunikationseinrichtung
- 100: zweite Kommunikationseinrichtung
- 102: vorgegebene Bahn
- 104: zweites Fasergelege
- 106: vorgegebene Bahn
- 108: drittes Fasergelege

## Patentansprüche

1. System (2) zum Herstellen eines Bauteils aus einem Faserverbundmaterial, aufweisend:
- ein Formwerkzeug (4),
- eine Steuereinheit (6) und
- eine Vielzahl von voneinander unabhängigen Materialauftrageinheiten (18),
wobei jede Materialauftrageinheit (18) einen Materialspeicher (38) zum Bereitstellen von Fasern, eine Materialabgabevorrichtung (40) zum Abgeben von Fasern aus dem Materialspeicher (38) und eine Vortriebseinrichtung (33) aufweist und dazu ausgebildet ist, mit Hilfe der Vortriebseinrichtung (33) einer vorgegebenen Bahn (22) auf dem Formwerkzeug (4) zu folgen und dabei bedarfsweise Fasern abzugeben,
wobei die Steuereinheit (6) dazu ausgebildet ist, die Materialauftrageinheiten (18) durch Vorgeben mehrerer individueller Bahnen (22) anzusteuern, und
wobei die Steuereinheit (6) dazu ausgebildet ist, durch Ansteuern der Materialauftrageinheiten (18) mindestens eine Lage von Fasergelegen (16, 104, 108) auf dem Formwerkzeug (4) zu erzeugen,
**dadurch gekennzeichnet, daß** die Steuereinheit (6) eine optische Projektionseinheit (10) aufweist, wobei die Projektionseinheit (10) dazu ausgebildet ist, vorgegebene Bahnen (22) optisch auf das Formwerkzeug (4) zu projizieren und
wobei die Materialauftrageinheiten (18) dazu ausgebildet sind, jeweils einer vorgegebenen Bahn (22) zu folgen.

2. System (2) nach Anspruch 1,
wobei die Steuereinheit (6) dazu ausgebildet ist, eine Projektion der vorgegebenen Bahnen (22) jeweils auf eine begrenzte Ausdehnung um eine dazugehörige Materialauftrageinheit (18) zu beschränken.

3. System (2) nach einem der vorhergehenden Ansprüche,
wobei die mindestens eine Projektionseinheit (10) dazu ausgebildet ist, mittels eines Laserstrahls (24) eine vorgegebene Bahn (22) auf das Formwerkzeug (4) zu projizieren.

4. System (2) nach einem der vorhergehenden Ansprüche,
wobei die Materialauftrageinheiten (18) eine mit der Vortriebseinrichtung (33) koppelbare Batterie (96) und eine Bahnsteuerungseinheit (94) aufweisen, wobei die Bahnsteuerungseinheit (94) dazu ausgebildet ist, die Vortriebseinrichtung (33) zum Folgen einer vorgegebenen Bahn (22) anzusteuern.

5. System (2) nach Anspruch 1 oder 2 und 4,
wobei die Materialauftrageinheiten (18) jeweils mindestens eine optische Erfassungseinrichtung (42, 44) aufweisen, die jeweils mit der zugehörigen Bahnsteuerungseinheit (94) gekoppelt ist, wobei die Bahnsteuerungseinheit (94) dazu ausgebildet ist, einer von der Erfassungseinrichtung (42, 44) erfassten optischen Projektion einer Bahn (22) zu folgen.

6. System (2) nach Anspruch 5,
wobei die Steuereinheit (6) dazu ausgebildet ist, mehrere optische Symbole (70, 72, 74, 76, 78, 80) auf das Formwerkzeug (4) zu projizieren,
wobei die Bahnsteuerungseinheit der Materialauftrageinheiten (18) jeweils dazu ausgebildet ist, von der Erfassungseinrichtung (42, 44) erfasste optische Symbole (70, 72, 74, 76, 78, 80) zu erkennen und damit zugeordnete Steuerbefehle umzusetzen.

7. System (2) nach Anspruch 4,
wobei die Materialauftrageinheiten (18) jeweils eine erste Kommunikationseinrichtung (98) aufweisen,
wobei die Steuereinheit (6) eine zweite Kommunikationseinrichtung (100) aufweist, und
wobei die Materialauftrageinheiten (18) dazu ausgebildet sind, Zustandsdaten über die erste Kommunikationseinrichtung (98) und die zweite Kommunikationseinrichtung (100) an die Steuereinheit (6) zu senden.

8. System (2) nach Anspruch 7,
wobei die Steuereinheit (6) dazu ausgebildet ist, über die erste Kommunikationseinrichtung (98) und die zweite Kommunikationseinrichtung (100) Steuerbefehle an die Materialauftrageinheiten (18) zu senden.

9. System (2) nach einem der vorhergehenden Ansprüche,
wobei der Materialspeicher (38) mindestens eine Spule (48, 58) zum Abgeben von Fasermaterial (52) aufweist.

10. System (2) nach Anspruch 9,
wobei der Materialspeicher (38) eine erste Spule (48) und eine zweite Spule (58) aufweist,
wobei die erste Spule (48) ein Materialträgerband (50) mit einem darauf angeordneten Fasermaterial (52) aufweist,
wobei das Materialträgerband (50) von der ersten Spule (48) abgebbar und von der zweiten Spule (58) aufnehmbar ist, und
wobei das Materialträgerband (50) an einer Umlenkvorrichtung (40) als Materialabgabevorrichtung (40) vorbeigeführt und in Kontakt mit dem Formwerkzeug (4) oder einem darauf befindlichen Fasergelege (16, 104, 108) bringbar ist.

11. System (2) nach einem der vorhergehenden Ansprüche,
wobei der Materialspeicher (38) auswechselbar an der Materialauftrageinheit (18) angeordnet ist, und
wobei die Steuereinheit (6) mit einer Materialhandhabungseinheit (8) gekoppelt ist, welche dazu ausgebildet ist, den Materialspeicher (38) mindestens eines der Materialauftrageinheiten (18) bedarfsweise auszutauschen.

12. System (2) nach Anspruch 11,
wobei die Materialhandhabungseinheit (8) dazu ausgebildet ist, einen Materialspeicher (38) mit Fasermaterial (52) zu befüllen.

13. System (2) nach einem der vorhergehenden Ansprüche,
ferner aufweisend eine Überarbeitungseinrichtung (82), die dazu ausgebildet ist, eine fehlerhafte Materialbahn (84) von dem Formwerkzeug oder einem darauf befindlichen Fasergelege (16, 104, 108) abzulösen.

## Claims

1. System (2) for manufacturing a component from a fibre composite material, comprising:
- a moulding tool (4),
- a control unit (6) and
- a plurality of mutually independent material application units (18),
wherein each material application unit (18) comprises a material store (38) for providing fibres, a material discharge device (40) for discharging fibres from the material store (38), and a propulsion device (33) and is adapted to follow a predetermined path (22) on the moulding tool (4) by means of the propulsion device (33), thereby discharging fibres as required,
wherein the control unit (6) is designed to control the material application units (18) by specifying a plurality of individual paths (22), and wherein the control unit (6) is designed to produce at least one layer of fibre layers (16, 104, 108) on the moulding tool (4) by controlling the material application units (18),
**characterised in that**
the control unit (6) comprises an optical projection unit (10),
wherein the projection unit (10) is adapted to optically project predetermined paths (22) onto the moulding tool (4) and wherein the material application units (18) are each designed to follow a predetermined path (22).

2. System (2) according to claim 1,
wherein the control unit (6) is designed to restrict a projection of the predetermined paths (22) in each case to a limited extent around an associated material application unit (18).

3. System (2) according to any one of the preceding claims,
wherein the at least one projection unit (10) is adapted to project a predetermined path (22) onto the moulding tool (4) by means of a laser beam (24).

4. System (2) according to any one of the preceding claims,
wherein the material application units (18) comprise a battery (96) couplable to the propulsion device (33) and a path control unit (94), the path control unit (94) being adapted to control the propulsion device (33) to follow a predetermined path (22).

5. System (2) according to claim 1 or 2 and 4,
wherein the material application units (18) each comprise at least one optical detection device (42, 44), each coupled to the associated path control unit (94), wherein the path control unit (94) is adapted to follow an optical projection of a path (22) detected by the optical detection device (42, 44).

6. System (2) according to claim 5,
wherein the control unit (6) is designed to project a plurality of optical symbols (70, 72, 74, 76, 78, 80) onto the moulding tool (4), wherein the path control unit of the material application units (18) is each adapted to recognise optical symbols (70, 72, 74, 76, 78, 80) detected by the optical detection device (42, 44) and to implement control commands associated therewith.

7. System (2) according to claim 4,
wherein the material application units (18) each have a first communication device (98), wherein the control unit (6) has a second communication device (100), and wherein the material application units (18) are designed to send status data to the control unit (6) via the first communication device (98) and the second communication device (100).

8. System (2) according to claim 7,
wherein the control unit (6) is adapted to send control commands to the material application units (18) via the first communication device (98) and the second communication device (100).

9. System (2) according to any one of the preceding claims,
wherein the material store (38) comprises at least one spool (48, 58) for dispensing fibre material (52).

10. System (2) according to claim 9,
wherein the material store (38) comprises a first spool (48) and a second spool (58),
wherein the first spool (48) comprises a material carrier tape (50) with a fibre material (52) arranged thereon,
wherein the material carrier band (50) can be dispensed from the first spool (48) and picked up by the second spool (58), and
wherein the material carrier band (50) is guided past a deflection device (40) as a material dispensing device (40) and can be brought into contact with the moulding tool (4) or a fibre layer (16, 104, 108) located thereon.

11. System (2) according to any one of the preceding claims,
wherein the material store (38) is replaceably arranged on the material application unit (18), and
wherein the control unit (6) is coupled to a material handling unit (8) which is adapted to replace the material store (38) of at least one of the material application units (18) as required.

12. System (2) according to claim 11,
wherein the material handling unit (8) is adapted to fill a material store (38) with fibre material (52).

13. System (2) according to any one of the preceding claims,
further comprising a reworking device (82) adapted to detach a defective web (84) from the moulding tool or a fibre layer (16, 104, 108) thereon.

## Revendications

1. Système (2) de fabrication d'un composant à partir d'un matériau composite à fibres, comprenant :
- un outil de moulage (4),
- une unité de commande (6) et
- une pluralité d'unités d'application de matériau mutuellement indépendantes (18),
dans lequel chaque unité d'application de matériau (18) comprend un magasin de matériau (38) pour fournir des fibres, un dispositif de décharge de matériau (40) pour décharger des fibres du magasin de matériau (38), et un dispositif de propulsion (33) et est adaptée pour suivre un trajet prédéterminé (22) sur l'outil de moulage (4) au moyen du dispositif de propulsion (33), déchargeant ainsi des fibres selon les besoins,
dans lequel l'unité de commande (6) est conçue pour commander les unités d'application de matériau (18) en spécifiant une pluralité de chemins individuels (22), et dans lequel l'unité de commande (6) est conçue pour produire au moins une couche de couches de fibres (16, 104, 108) sur l'outil de moulage (4) en commandant les unités d'application de matériau (18),
**caractérisé en ce que**
l'unité de commande (6) comprend une unité de projection optique (10),
dans laquelle l'unité de projection (10) est adaptée pour projeter optiquement des chemins prédéterminés (22) sur l'outil de moulage (4) et dans laquelle les unités d'application de matériau (18) sont chacune conçues pour suivre un chemin prédéterminé (22).

2. Système (2) selon la revendication 1,
dans lequel l'unité de commande (6) est conçue pour limiter une projection des trajets prédéterminés (22) dans chaque cas à une étendue limitée autour d'une unité d'application de matériau associée (18).

3. Système (2) selon l'une quelconque des revendications précédentes,
dans lequel la au moins une unité de projection (10) est adaptée pour projeter un trajet prédéterminé (22) sur l'outil de moulage (4) au moyen d'un faisceau laser (24).

4. Système (2) selon l'une quelconque des revendications précédentes,
dans lequel les unités d'application de matériau (18) comprennent une batterie (96) pouvant être couplée au dispositif de propulsion (33) et une unité de commande de trajectoire (94), l'unité de commande de trajectoire (94) étant adaptée pour commander le dispositif de propulsion (33) pour suivre une trajectoire prédéterminée (22).

5. Système (2) selon la revendication 1 ou 2 et 4,
dans lequel les unités d'application de matériau (18) comprennent chacune au moins un dispositif de détection optique (42, 44), chacun étant couplé à l'unité de commande de trajet associée (94), dans lequel l'unité de commande de trajet (94) est adaptée pour suivre une projection optique d'un trajet (22) détecté par le dispositif de détection optique (42, 44).

6. Système (2) selon la revendication 5,
dans lequel l'unité de commande (6) est conçue pour projeter une pluralité de symboles optiques (70, 72, 74, 76, 78, 80) sur l'outil de moulage (4), dans lequel l'unité de commande de trajet des unités d'application de matériau (18) est chacune adaptée pour reconnaître des symboles optiques (70, 72, 74, 76, 78, 80) détectés par le dispositif de détection optique (42, 44) et pour mettre en oeuvre des commandes de contrôle associées à ceux-ci.

7. Système (2) selon la revendication 4,
dans lequel les unités d'application de matériau (18) ont chacune un premier dispositif de communication (98), dans lequel l'unité de commande (6) a un second dispositif de communication (100), et dans lequel les unités d'application de matériau (18) sont conçues pour envoyer des données d'état à l'unité de commande (6) via le premier dispositif de communication (98) et le second dispositif de communication (100).

8. Système (2) selon la revendication 7,
dans lequel l'unité de commande (6) est adaptée pour envoyer des commandes de contrôle aux unités d'application de matériau (18) via le premier dispositif de communication (98) et le second dispositif de communication (100).

9. Système (2) selon l'une quelconque des revendications précédentes,
dans lequel le magasin de matériau (38) comprend au moins une bobine (48, 58) pour distribuer le matériau fibreux (52).

10. Système (2) selon la revendication 9,
dans lequel le magasin de matériaux (38) comprend une première bobine (48) et une seconde bobine (58),
dans lequel la première bobine (48) comprend une bande de support de matériau (50) avec un matériau en fibre (52) disposé sur celle-ci,
dans lequel la bande de support de matériau (50) peut être distribuée à partir de la première bobine (48) et prise par la deuxième bobine (58), et
dans lequel la bande de support de matériau (50) est guidée devant un dispositif de déviation (40) en tant que dispositif de distribution de matériau (40) et peut être mise en contact avec l'outil de moulage (4) ou une couche de fibres (16, 104, 108) située sur celui-ci.

11. Système (2) selon l'une quelconque des revendications précédentes,
dans lequel le magasin de matériaux (38) est disposé de manière remplaçable sur l'unité d'application de matériaux (18), et
dans lequel l'unité de commande (6) est couplée à une unité de manipulation de matériaux (8) qui est adaptée pour remplacer le magasin de matériaux (38) d'au moins une des unités d'application de matériaux (18) selon les besoins.

12. Système (2) selon la revendication 11,
dans lequel l'unité de manipulation de matériau (8) est adaptée pour remplir un magasin de matériau (38) avec un matériau fibreux (52).

13. Système (2) selon l'une quelconque des revendications précédentes,
comprenant en outre un dispositif de retraitement (82) adapté pour détacher une bande défectueuse (84) de l'outil de moulage ou une couche de fibres (16, 104, 108) sur celle-ci.
